(19) Europäisches Patentamt
European Patent Office
Office européen des brevets

(11) EP 3 474 100 A1

(12) EUROPÄISCHE PATENTANMELDUNG

(43) Veröffentlichungstag:
24.04.2019 Patentblatt 2019/17

(51) Int Cl.:
G05B 19/416 (2006.01)    G05B 19/4061 (2006.01)
B25J 9/16 (2006.01)

(21) Anmeldenummer: 18204579.9

(22) Anmeldetag: 07.10.2013

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR

(30) Priorität: 08.10.2012   DE 102012218276
02.07.2013   DE 102013212887

(62) Dokumentnummer(n) der früheren Anmeldung(en)
nach Art. 76 EPÜ:
13774641.8 / 2 904 460

(71) Anmelder: Deutsches Zentrum für Luft- und
Raumfahrt e.V.
51147 Köln (DE)

(72) Erfinder:
• Haddadin, Sami
30173 Hannover (DE)
• Haddadin, Simon
30826 Garbsen (DE)

(74) Vertreter: Ege Lee & Partner
Patentanwälte PartGmbB
Walter-Gropius-Straße 15
80807 München (DE)

Bemerkungen:
Diese Anmeldung ist am 06-11-2018 als
Teilanmeldung zu der unter INID-Code 62 erwähnten
Anmeldung eingereicht worden.

(54) **VERFAHREN ZUM NUTZBARMACHEN VON BIOMECHANISCHEM UND/ODER MEDIZINISCHEM WISSEN ZUR STEUERUNG EINER ROBOTEREINRICHTUNG, VERFAHREN ZUM STEUERN EINER ROBOTEREINRICHTUNG UND COMPUTERPROGRAMMPRODUKT**

(57) Verfahren zum Nutzbarmachen von biomechanischem und/oder medizinischem Wissen zur Steuerung einer Robotereinrichtung, wobei zwischen einer Kollisionsmasse, einer Kollisionsgeschwindigkeit und/oder einer Kollisions-Kontakt-Geometrie einerseits und auftretenden Verletzungen andererseits eine Beziehung hergeleitet und als Verletzungswissen in einen verletzungsbasierten Geschwindigkeitsregler integriert wird, Verfahren zum Steuern einer Robotereinrichtung aufweisend einen bewegbaren Manipulator und/oder Effektor, wobei eine Bewegungsgeschwindigkeit und/oder -richtung des Manipulators und/oder Effektors unter Berücksichtigung von biomechanischem und/oder medizinischem Wissen, das gemäß einem derartigen Verfahren nutzbar gemacht wird, und einer Roboterdynamik überwacht und gegebenenfalls angepasst wird, und Computerprogrammprodukt zur Durchführung eines derartigen Verfahrens.

Fig. 2

EP 3 474 100 A1

**Beschreibung**

Die Erfindung betrifft ein Verfahren zum Nutzbarmachen von biomechanischem und/oder medizinischem Wissen zur Steuerung einer Robotereinrichtung. Außerdem betrifft die Erfindung ein Verfahren zum Steuern einer Robotereinrichtung aufweisend einen bewegbaren Manipulator und/oder Effektor. Außerdem betrifft die Erfindung ein Computerprogrammprodukt, das in eine Recheneinrichtung geladen werden kann und Softwarecodeabschnitte umfasst.

Eine enge physikalische Mensch-Roboter-Kooperation, pMRK, ist eine der großen Herausforderungen an die Robotikforschung. Einige robotische Systeme haben bereits die nötigen regelungstechnischen Fähigkeiten erlangt, um feinfühlige und komplexe Manipulationen sowie MRK-Aufgaben, welche den dynamischen Austausch von Kräften zwischen Roboter und Umgebung voraussetzen, durchzuführen. In diesem Zusammenhang wird auf die Veröffentlichungen A. Albu-Schäffer, S. Haddadin, C. Ott, A. Stemmer, T. Wimböck and G. Hirzinger, "The DLR Lightweight Robot Lightweight Design and Soft Robotics Control Concepts for Robots in Human Environments", Industrial Robot Journal, vol. 34, pp. 376--385, 2007, und D. Shin, I. Sardellitti, and O. Khatib, "Hybrid actuation approach for human-friendly robot design", in IEEE Int. Conf. on Robotics and Automation (ICRA2008), Pasadena, USA, 2008, pp. 1741-1746 verwiesen.

Dieser Schritt machte es zum Beispiel möglich, schwierige und bis dato manuell durchgeführte Montageaufgaben auszuführen. Im Besonderen helfen die erreichten sensitiven und schnellen Manipulationsfähigkeiten dieser Roboter potentiell fragile Objekt nicht zu beschädigen und über dies sind sie grundsätzlich weitaus weniger gefährlich für Menschen, die mit dem Gerät interagieren sollen. In diesem Zusammenhang wird auf die Veröffentlichungen N. Hogan, "Impedance control: An approach to manipulation: Part I -theory, Part II -implementation, Part III - applications", Journal of Dynamic Systems, Measurement and Control, vol. 107, pp. 1--24, 1985, S. Haddadin, A. Albu-Schäffer, A. D. Luca and G. Hirzinger, "Collision detection & reaction: A contribution to safe physical human-robot interaction", in IEEE/RSJ Int. Conf. on Intelligent Robots and Systems (IROS2008), Nice, France, 2008, pp. 3356-3363, und A. De Luca and R. Mattone, "An Adapt-and-Detect Actuator FDI Scheme for Robot Manipulators", IEEE Int. Conf. on Robotics and Automation (ICRA2004), New Orleans, USA, pp. 4975--4980, 2004, verwiesen.

Um eine derartige physikalische Kooperation von Mensch und Roboter zu ermöglichen, hat sich ein großes Interesse entwickelt, klassische Sicherheitsbarrieren, wie Schutzzäune oder Lichtschranken, für "menschenfreundliche" Roboter, die der direkten Interaktion mächtig sind, zu entfernen. Um die damit nötigen Sicherheitsregularien definieren zu können, muss natürlich zuerst verstanden werden, wie ein Roboter für derartige Aufgaben auszusehen hat und auch wie er geregelt wird, sodass er sicher in der menschlichen Umgebung operieren kann. Es ist grundsätzlich sicherzustellen, dass ein Mensch selbst unter Worst-Case Bedingungen keine schwerwiegende Verletzung davon trägt. Basierend auf den Pionierarbeiten von Yamada, bei der die menschliche Schmerztoleranz als sicheres Kollisionskriterium eines Roboters eingeführt wurde, haben andere dieses Forschungsgebiet erweitert. In diesem Zusammenhang wird auf die Veröffentlichung Y. Yamada, Y. Hirasawa, S. Huang, Y. Umetani and K. Suita, "Human-robot contact in the safeguarding space" IEEE/ASME Transactions on Mechatronics, vol. 2, no. 4, pp. 230--236, 1997, verwiesen.

Insbesondere wurden neue Antriebstechnologien, Interaktionsregelungsalgorithmen und Roboter-Mensch-Kollisionsverletzungsmodelle eingeführt. In diesem Zusammenhang wird auf die Veröffentlichungen K. Ikuta, H. Ishii, and M. Nokata, "Safety evaluation method of design and control for human-care robots," The Int. J. of Robotics Research, vol. 22, no. 5, pp. 281--298, 2003, A. Bicchi and G. Tonietti, "Fast and soft arm tactics: Dealing with the safety-performance tradeoff in robot arms design and control," IEEE Robotics and Automation Magazine, vol. 11, no. 2, pp. 22-23, 2004, M. Zinn, O. Khatib, B. Roth, and J. K. Salisbury, "A new actuation approach for human-friendly robot design," International Journal ofRobotics Research, vol. 23, no. 4/5, pp. 379--398, 2005, J. Heinzmann and A. Zelinsky, "Quantitative safety guarantees for physical human-robot interaction," The Int. J. of Robotics Research, vol. 22, no. 7-8, pp. 479--504, 2003, S. Oberer and R.-D. Schraft, "Robot-dummy crash tests for robot safety assessment," in IEEE Int. Conf. on Robotics and Automation (ICRA2007), Rome, Italy, 2007, pp. 2934-2939, J.-J. Park and J.-B. Song, "Collision analysis and evaluation of collision safety for service robots working in human environments," in Advanced Robotics, 2009. ICAR 2009. International Conference on, 2009, pp. 1-6,] D.Gao and C. Wampler, "On the use of the head injury criterion (HIC) to assess the danger of robot impacts," IEEE Robotics and Automation Mag., vol. 16, no. 4, pp. 71--74, 2009, B. Povse, D. Koritnik, R. Kamnik, T. Bajd, and M. Munih, "Industrial robot and human operator collision," in IEEE Int. Conf. on Systems Man and Cybernetics (SMC2010), Istanbul, Turkey, 2010, pp. 2663-2668, S. Haddadin, A. Albu-Schäffer, and G. Hirzinger, "Safe Physical Human-Robot Interaction: Measurements, Analysis & New Insights," in International Symposium on Robotics Research (ISRR2007), Hiroshima, Japan, 2007, pp. 439-450, M. Wassink and S. Stramigioli, "Towards a novel safety norm for domestic robots," IEEE/RSJ Int. Conf. on Intelligent Robots and Systems (IROS2007), San Diego, USA, pp. 3243--3250, 2007, und ISO10218, "Robots for industrial environments -Safety requirements -Part 1: Robot," 2006, verwiesen.

Diese Tatsache zeigt, dass die Analyse und das Verständnis von Verletzungen in der Robotik eine essentielle Voraussetzung sind, um echte pMRK auch in realen Anwendungen möglich zu machen.

Über die letzten Jahre wurden einige der ersten Sicherheitsstudien in der Robotik durchgeführt, welche Einsichten in die potentiellen Verletzungen, die ein Mensch in Folge einer Kollision mit einem Roboter davontragen würde, geliefert haben. In diesem Zusammenhang wird auf die Veröffentlichungen S. Haddadin, A. Albu-Schäffer, and G. Hirzinger, "Safety Evaluation of Physical Human-Robot Interaction via Crash-Testing," Robotics: Science and Systems Conference (RSS2007), Atlanta, USA, 2007, ------, "Requirements for Safe Robots: Measurements, Analysis & New Insights," Int. J. of Robotics Research, vol. 28, no. 11, pp. 1507-1527, 2009, S. Haddadin, A. Albu-Schäffer, M. Frommberger, J. Roßmann, and G. Hirzinger, "The "DLR Crash Report": Towards a Standard Crash-Testing Protocol for Robot Safety -Part I: Results," in IEEE Int. Conf. on Robotics and Automation (ICRA2008), Kobe, Japan, 2009, pp. 272-279, und J. Park, S. Haddadin, J. Song, and A. Albu-Schäffer, "Designing optimally safe robot surface properties for minimizing the stress characteristics of human-robot collisions," in IEEE Int. Conf. on Robotics and Automation (ICRA2011), Shanghai,China, 2011, pp. 5413-5420, verwiesen. Die Diskussion und Analyse verschiedener Worst-Case MRK-Szenarien wurde bisher nach folgendem Schema durchgeführt:

1) Auswahl und/oder Definition und Klassifizierung der Kollisionsart
2) Auswahl der entsprechenden Verletzungsmessmethode
3) Beurteilung der potentiellen Verletzung eines Menschen
4) Quantifizierung des Einflusses der relevanten Roboterparameter
5) Beurteilung der Effizienz der Gegenmaßnahmen zur Verletzungsminimierung und/oder -prävention

Diese Analyse brachte Grundlagen zu Verletzungshergängen z.B. bei schnellen, stumpften Einschlägen, dynamischen und quasistatischen Klemmungen oder Schnitte und Stiche durch scharfe Werkzeuge, hervor.

Im Allgemeinen kann man zusammenfassen, dass die Analyse von Verletzungen zu einem bedeutenden Teilbereich der Robotikforschung wurde, da auch die internationalen Normungsgremien begonnen haben Anforderungen an sichere Roboter zu übernehmen. Die Tatsache, dass es erwartet wird, mögliche Verletzungen in einer Anwendung auf sehr leichte stumpfe Verletzungen zu begrenzen, betont darüber hinaus die generelle Notwendigkeit sich in diesem interdisziplinären Feld zu engagieren. Je schneller die Forschung neue Einsichten in das Verständnis von Verletzungen in der Robotik erbringt, desto schneller wird man MRK-Aufgaben in der realen Welt einführen können.

Ein weiteres offenes Problem der Sicherheitsthematik in der Robotik ist, wie man das eher allgemeine Verständnis von Verletzungen in die Roboterregelung einfließen lassen kann. Einsichten über Verletzungen in der Robotik werden normalerweise dazu verwendet, einen sichereren mechanischen Entwurf zu unterstützen oder zu zeigen, dass ein gewisses mechanisches Design einen vorteilhaften Einfluss auf mögliche Verletzungen während einer ungewollten Kollision hat. Verletzungswissen wurde bisher nicht ausdrücklich als eine einzuhaltene Beschränkung in der Regelung eingeführt.

Außerdem ist aus dem Dokument DE 10 2009 051 146 A1 eine Vorrichtung eines Hüttenwerks und/oder Walzwerks bekannt umfassend einen Roboter mit einer Robotersteuerung mit einer zugeordneten Mensch-Roboter-Schnittstelle beeinflussenden Betriebsarten und Betriebsmodi, die an unterschiedliche Automatisationsgrade des Roboters und/oder an unterschiedliche zeitliche und/oder örtliche Positionierungen der Interaktionspartner Mensch und Roboter in einem Arbeitsraum angepasst und/oder anpassbar ausgebildet sind, wobei dem Roboter, insbesondere Industrieroboter, zumindest ein von mit dem Roboter, insbesondere Industrieroboter, zusammenwirkenden Detektionselementen erfasster Schutzbereich zugeordnet ist, der hinsichtlich seiner Ausdehnung und Funktionalität robotertätigkeitsbezogen und/oder roboterarbeitspositionsbezogen variierend und/oder variierbar ausgebildet ist und wobei der Roboter, insbesondere Industrieroboter, auf oder an einer auf einer Fahrbahn verfahrbaren Verfahreinrichtung angeordnet ist, um eine Lösung zu schaffen, die eine flexiblere Anpassung eines Roboters oder Robotersystems an unterschiedliche Grade einer Mensch-Roboter-Interaktion sowie einen flexibilisierten Einsatz eines Industrieroboters im Rahmen von Arbeitstätigkeiten und Arbeitsabläufen einer großtechnischen Anlage, insbesondere hüttenmännischen Anlage, ermöglicht.

Aus dem Dokument DE 102010 063 208 A1 ist ein Verfahren bekannt zum Betreiben einer Sicherungseinrichtung für eine Handhabungsvorrichtung, insbesondere einen Industrieroboter, mit einer beweglichen Greifeinrichtung, sowie mit zumindest einer die Greifeinrichtung zumindest weitgehend umgebenden Sensoreinrichtung zum Erkennen zumindest möglicher Kollisionen mit im Bewegungsweg der Greifeinrichtung befindlichen Objekten, wobei beim Erkennen einer Kollisionsgefahr ein Signal an eine Steuereinrichtung erzeugt wird, die einen geänderten Bewegungsablauf der Greifeinrichtung auf ihrer Bewegungsbahn zur Folge hat, bei dem der geänderte Bewegungsablauf eine gesteuerte Reduzierung der Bewegungsgeschwindigkeit der Greifeinrichtung ist, um ein Verfahren zum Betreiben einer Sicherungseinrichtung für eine Handhabungsvorrichtung, insbesondere einen Industrieroboter, derart weiterzubilden, dass insbesondere eine vereinfachte Wiederinbetriebnahme bzw. ein Weiterbetrieb der Handhabungsvorrichtung möglich ist, wenn die Kollisionsgefahr nicht mehr besteht.

Aus dem Dokument US 2008/161970 A1 ist eine Robotereinrichtung bekannt, die Robotereinrichtung aufweisend eine Robotermechanikeinheit mit einem Roboterarm und einem Roboterkörper, an dem der Roboterarm angeordnet ist; eine Objekterkennungseinheit zum Erkennen aller oder einer Mehrzahl von Objekten unter drei Typen von Objekten eines sich bewegenden Objekts, eines Tiers und einer Person als zu schützendes Objekt; eine Kontrolleinheit zum Kontrollieren der Robotermechanikeinheit, um durch Verwendung des Roboterarms der Robotermechanikeinheit einen Arbeitsvorgang auszuführen, während das von der Objekterkennungseinheit erkannte Objekt davor geschützt wird, von einem Arbeitsbereich der Robotermechanikeinheit erfasst zu werden, indem einem Abschnitt der Robotermechanikeinheit ermöglicht wird, einen Schutzvorgang auszuführen, wobei die Kontrolleinheit die Robotermechanikeinheit derart kontrolliert, dass der Schutzvorgang ausgeführt wird durch Ändern einer Entfernung zwischen dem von der Objekterkennungseinheit erkannten zu schützenden Objekt und dem Roboterarm, in Reaktion auf eine relative die Lage betreffende Beziehung zwischen dem von der Objekterkennungseinheit erkannten Objekt und dem Arbeitsbereich der Robotermechanikeinheit.

Der Erfindung liegt die Aufgabe zugrunde, eingangs genannte Verfahren bereit zu stellen, die funktional verbessert sind. Außerdem liegt der Erfindung die Aufgabe zugrunde, ein eingangs genanntes Computerprogrammprodukt bereit zu stellen, das funktional verbessert ist. Insbesondere soll biomechanisches und/oder medizinisches Wissen zur Steuerung einer Robotereinrichtung nutzbar gemacht werden. Insbesondere soll die Robotereinrichtung befähigt werden, sicher mit einem Menschen in sich überschneidenden Arbeitsbereichen zusammenzuarbeiten. Insbesondere soll eine Verletzungsgefahr für den Menschen verringert oder ausgeschlossen werden. Insbesondere soll die Robotereinrichtung befähigt werden, eine Auswirkung einer erwarteten Kollision mit einem menschlichen Körper abzuschätzen. Insbesondere soll die Robotereinrichtung befähigt werden, ihre Bewegungsgeschwindigkeit und/oder - richtung basierend auf dieser Abschätzung anzupassen. Insbesondere soll ein Verfahren zur Verfügung gestellt werden, bei dem keine externen Sensoren, wie Kameras, benötigt werden.

Die Aufgabe wird gelöst mit einem Verfahren mit den Merkmalen des Anspruchs 1. Außerdem wird die Aufgabe gelöst mit einem Verfahren mit den Merkmalen des Anspruchs 13. Außerdem wird die Aufgabe gelöst mit einem Computerprogrammprodukt mit den Merkmalen des Anspruchs 14. Vorteilhafte Ausführungen und Weiterbildungen sind Gegenstand der abhängigen Ansprüche.

Der Manipulator und/oder Effektor kann entlang einer vorgegebenen Bahn bewegbar sein. Der Manipulator und/oder Effektor kann mit einer vorgegebenen Bewegungsgeschwindigkeit bewegbar sein. Die medizinischen Verletzungsparameter können Informationen beinhalten, die für eine Auswirkung einer Kollision zwischen dem Manipulator und/oder Effektor und einem menschlichen Körper repräsentativ sind. Die Auswirkung kann eine Verletzung eines menschlichen Körpers sein. Die medizinischen Verletzungsparameter können in dem Verfahren als Eingangsgröße verwendet werden. Eine Bewegungsgeschwindigkeit und/oder -richtung des Manipulators und/oder Effektors kann angepasst werden, um eine Verletzung zu verringern oder zu verhindern. Eine Bewegungsgeschwindigkeit des Manipulators und/oder Effektors kann durch ein Reduzieren angepasst werden.

Eine Roboterdynamik kann eine physikalische Dynamik sein. Eine Roboterdynamik kann eine kinetische Dynamik sein. Eine Roboterdynamik kann eine Dynamik eines starren und elastischen Mehrkörpersystems sein. Zum Überwachen und gegebenenfalls Anpassen der Bewegungsgeschwindigkeit und/oder -richtung des Manipulators und/oder Effektors können eine Kollisionsmasse, eine Kollisionsgeschwindigkeit und/oder eine Kollisions-Kontakt-Geometrie des Manipulators und/oder Effektors berücksichtigt werden. Eine Kollisionsmasse, eine Kollisionsgeschwindigkeit und/oder eine Kollisions-Kontakt-Geometrie des Manipulators und/oder Effektors können in dem Verfahren als Eingangsgröße verwendet werden. Eine erwartete Kollisionsmasse, Kollisionsgeschwindigkeit und/oder Kollisions-Kontakt-Geometrie wenigstens eines vorgegebenen relevanten Punkts des Manipulators und/oder Effektors kann berücksichtigt werden. Die Erwartung kann sich dabei auf einen vermuteten oder bekannten Aufenthaltsort eines Menschen im Arbeitsbereich der Robotereinrichtung unter Berücksichtigung der vorgegebenen Bewegungsbahn beziehen.

Zum Überwachen und gegebenenfalls Anpassen der Bewegungsgeschwindigkeit und/oder -richtung des Manipulators und/oder Effektors werden Kennwerte herangezogen, die einen Zusammenhang zwischen Kollisionsmasse, Kollisionsgeschwindigkeit und/oder Kollisions-Kontakt-Geometrie des Manipulators und/oder Effektors einerseits und medizinischer Verletzungsparameter andererseits abbilden. Die Kennwerte können in Masse-Geschwindigkeits-Diagrammen für unterschiedliche Kontakt-Geometrien und unterschiedliche Verletzungsarten abgebildet sein. Die Kontakt-Geometrien können einfache repräsentative Geometrien sein. Eine Kontakt-Geometrie kann keilförmig sein. Die Kontakt-Geometrien können keilförmig mit unterschiedlichen Winkeln sein. Eine Kontakt-Geometrie kann kugelförmig sein. Die Kontakt-Geometrien können kugelförmig mit unterschiedlichen Durchmessern sein. Eine Verletzungsart kann eine Verletzung einer geschlossenen Haut eines Körpers sein. Eine Verletzungsart kann eine Verletzung von Muskeln und Sehnen eines Körpers sein. Eine Verletzungsart kann eine neurovaskuläre Verletzung eines Körpers sein. Eine Verletzungsart kann eine Fraktur von Knochen eines Körpers sein. Eine Verletzungsart kann eine Verletzung eines Auges und/oder eines Kehlkopfs sein.

Die medizinischen Verletzungsparameter können einer Speichereinrichtung entnommen werden. Die Speichereinrichtung kann eine Datenbank sein. Die medizinischen Verletzungsparameter können einer Verletzungs-Datenbank entnommen werden. Die medizinischen Verletzungsparameter können durch Versuche ermittelt worden sein. Die medizinischen Verletzungsparameter können durch Versuche mit tierischen Körpern, beispielsweise Schweinekörpern, ermittelt worden sein. Die medizinischen Verletzungsparameter können durch Fall-Versuche ermittelt worden sein. Die medizinischen Verletzungsparameter können durch Versuche mit menschlichen oder tierischen Leichen ermittelt worden sein. Die medizinischen Verletzungsparameter können durch Versuche mit menschlichen oder tierischen Probanden ermittelt worden sein.

Beim Überwachen und gegebenenfalls Anpassen der Bewegungsgeschwindigkeit und/oder -richtung des Manipulators und/oder Effektors kann wenigstens ein einstellbarer Schwellwert berücksichtigt werden. Der Schwellwert kann in dem Verfahren als Eingangsgröße verwendet werden. Vor einem Anpassen einer Bewegungsgeschwindigkeit und/oder -richtung des Manipulators und/oder Effektors kann ein Abgleich mit dem Schwellwert erfolgen. Der Schwellwert kann eine maximal zulässige Auswirkung auf einen menschlichen Körper repräsentieren. Der Schwellwert kann variabel sein. Eine Erhöhung des Schwellwerts kann eine Erhöhung der maximal zulässigen Auswirkung und eine Erhöhung einer Produktivität der Robotereinrichtung bewirken. Eine Verringerung des Schwellwerts kann eine Verringerung der maximal zulässigen Auswirkung und eine Verringerung einer Produktivität der Robotereinrichtung bewirken.

Das Verfahren kann in Echtzeit durchgeführt werden. Eine erwartete Kollisionsmasse, Kollisionsgeschwindigkeit und/oder Kollisions-Kontakt-Geometrie kann in Echtzeit bestimmt werden. Ein Zugriff auf eine Speichereinrichtung, die medizinische Verletzungsparameter enthält, kann in Echtzeit erfolgen. Ein Vergleich der erwarteten Kollisionsmasse, Kollisionsgeschwindigkeit und/oder Kollisions-Kontakt-Geometrie mit den medizinischen Verletzungsparametern kann in Echtzeit erfolgen. Ein Abgleichen mit einem einstellbaren Schwellwert kann in Echtzeit erfolgen. Ein Anpassen der Bewegungsgeschwindigkeit und/oder -richtung des Manipulators kann in Echtzeit erfolgen.

Das Verfahren kann auf einer Kommandierungsebene oder auf einer Messwertebene durchgeführt werden. Eine Kommandierungsebene kann eine Steuerungsebene sein, auf der dem Manipulator und/oder Effektor Sollwerte zur Bewegung vorgegeben werden. Das Verfahren kann auf einer Sollwertebene durchgeführt werden. Dies kann bei einer Robotereinrichtung mit einem vergleichsweise starren Manipulator und/oder Effektor vorteilhaft sein, also bei einer Robotereinrichtung, bei der bei einer Bewegung eine geringe Abweichung zwischen Sollwerten und Istwerten auftritt. Eine Messwertebene kann eine Steuerungsebene sein, auf der Istwerte des Manipulators und/oder Effektors bei einer Bewegung ausgegeben werden. Dies kann bei einer Robotereinrichtung mit einem vergleichsweise weichen Manipulator und/oder Effektor vorteilhaft sein, also bei einer Robotereinrichtung, bei der bei einer Bewegung eine erhöhte Abweichung zwischen Sollwerten und Istwerten auftritt.

Das Verfahren kann durchgeführt werden mithilfe einer Robotereinrichtung aufweisend einen bewegbaren Manipulator und/oder Effektors und eine Steuereinrichtung mit einer Recheneinrichtung und einer Speichereinrichtung,. Die Robotereinrichtung kann ein Industrieroboter sein. Der Effektor kann an dem Manipulator angeordnet sein. Der Manipulator kann eine Basis aufweisen. Der Manipulator kann wenigstens einen Armabschnitt aufweisen. Der Manipulator kann wenigsten ein Gelenk aufweisen. Der Manipulator kann wenigstens eine Bewegungsachse aufweisen. Der Manipulator kann wenigstens einen, insbesondere elektromotorischen, Antrieb aufweisen. Der Manipulator kann wenigstens ein Getriebe aufweisen. Die Steuereinrichtung kann zum Steuern des Manipulators dienen. Die Steuereinrichtung kann mit dem Manipulator und/oder Effektor signalleitend verbunden sein. Die Steuereinrichtung kann Ausgangssignal für den Manipulator erzeugen. Die Steuereinrichtung kann Eingangssignal von dem Manipulator und/oder Effektor empfangen und verarbeiten. Die Recheneinrichtung kann Daten mithilfe einer programmierbaren Rechenvorschrift verarbeiten. Die Speichereinrichtung kann zur Bereitstellung der Daten dienen. Diese Daten können die Verletzungsparameter enthalten.

Das Computerprogrammprodukt kann in einer Speichereinrichtung materialisiert sein. Die Speichereinrichtung zur Speicherung von Daten geeignet sein. Die Speichereinrichtung kann ein elektronisches, ein magnetisches und/oder ein optisches Speichermedium aufweisen. Die Speichereinrichtung kann insbesondere eine Speicherkarte, einen Flash-Speicher, eine USB-Stick, ein Solid State Drive, eine Festplatte, ein Magnetband, eine Diskette, eine CD oder eine DVD aufweisen. Das Computerprogrammprodukt kann übertragbar sein. Das Computerprogrammprodukt kann über ein, insbesondere kabelgebundenes oder kabelloses, Netzwerk übertragbar sein.

Mit der Erfindung wird biomechanisches und/oder medizinisches Wissen zur Steuerung einer Robotereinrichtung nutzbar gemacht. Die Robotereinrichtung wird befähigt, sicher mit einem Menschen in sich überschneidenden Arbeitsbereichen zusammenzuarbeiten. Eine Verletzungsgefahr für den Menschen kann verringert oder ausgeschlossen werden. Die Robotereinrichtung wird befähigt, eine Auswirkung einer erwarteten Kollision mit einem menschlichen Körper abzuschätzen. Die Robotereinrichtung wird befähigt, ihre Bewegungsgeschwindigkeit und/oder -richtung basierend auf dieser Abschätzung anzupassen. Es wird ein Verfahren zur Verfügung gestellt, bei dem keine externen Sensoren, wie Kameras, benötigt werden.

Mit der Erfindung wird ein konkreter Lösungsansatz für die genannten Probleme angegeben. Als erstes wird eine Beziehung zwischen Kollisionsmasse, Geschwindigkeit, Geometrie und medizinisch sichtbaren Weichteilverletzungen z. B. mittels systematischer Fallversuchsexperimente auf Schweinebauchpräparate untersucht. Alternativen wären z. B. Pendelversuche oder direkte Roboterkollisionsversuche. Auftretende Verletzungen können nach der internationalen medizinischen AO-Klassifizierung eingeteilt werden, die auch begleitende Weichteilverletzungen beinhaltet. In diesem Zusammenhang wird auf die Veröffentlichung T. P. Rüedi, R. E. Buckley, and C. G. Morgan, AO Principles of Fracture Management, Thieme, Ed., 2007, verwiesen. Auf Grund des wachsenden Bedarfs der internationalen Robotikstandardisierung sich auf leichte Prellungen zu fokussieren, kann diese auch in eine Analyse einbezogen werden. Diese allgemeinen Einsichten können dann in einen verletzungsbasierten Geschwindigkeitsregler integriert werden. Dieser kann dynamisch eine gewünschte Sollgeschwindigkeit durch die Betrachtung einer instantanen dynamischen Robotereigenschaften verändern. Insbesondere können eine kartesische Kollisionsgeschwindigkeit und eine reflektierte Trägheit des Roboters, welches die "gefühlte" skalare Masse entlang der Kollisionsrichtungen ist, ausgewertet werden.

Mit anderen Worten kann ein vorab gesammeltes Verletzungswissen in einen Bewegungsregler einfließen, sodass keine Trajektorien ausgeführt werden, die eine gewisse Verletzungsgrenze überschreiten würden.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:

Fig. 1    eine Auswahl an Kontaktprimitiven für Weichteilexperimente,

Fig. 2    eine Abhängigkeit einer AO-Klassifikation von Kollisionsmasse und-geschwindigkeit für unterschiedliche Kontaktprimitiven,

Fig. 3    konservative Sicherheitskennlinien für unterschiedliche Kontaktprimitiven,

Fig. 4    einen Endeffektor bestehend aus Kontaktprimitiven und assoziierten POIs,

Fig. 5    einen Roboter mit dem Endeffektor zur Durchführung von Experimenten,

Fig. 6    Trajektorien eines Linientests und eines Ribbontests und

Fig. 7    ein SVC-Experiment "line test" und "ribbon test".

Einführung, Ansatz:

Vorliegend sollen robotische Systeme für die MRK sicher gestaltet werden, ohne einfach nur pauschale Grenzen einzuführen, so wie es z.B. bei der ISO-10218-2006 der Fall war. Alle vorgestellten Ergebnisse und Einsichten haben einen sehr allgemeinen Charakter und sind nicht nur auf einen gewissen Roboterentwurf zugeschnitten. Die vorliegenden Ergebnisse, Analysen und Regelungsalgorithmen können prinzipiell für jeden Roboter von Nutzen sein. Es muss zuerst der Einfluss einer generischen Kollision zwischen einem Roboter und einem Menschen verstanden werden. Genauer gesagt, muss man sich die Frage stellen, wie die Beziehung zwischen Einschlagsmasse, -geschwindigkeit und Kontaktgeometrie sowie auftretenden Verletzungen ist. Diese Information kann dann genutzt werden, um ein Regelalgorithmus zu entwerfen, der dieses Wissen so nutzt, dass einem Roboter auf sehr niedriger algorithmischer Ebene vermittelt wird, was eine sichere Interaktion konkret bedeutet. Dieser Ansatz ist insbesondere nützlich, damit sich ein Roboter schnellstmöglich unter der Einhaltung der menschlichen Sicherheit bewegen vermag. Im Grunde wird die Frage "Wie schnell kann ich mich bewegen, ohne jemanden zu verletzen?" beantwortet. Bevor man Weichteilverletzungen in der Robotik versteht, sind zuallererst ausreichende biomechanische Verletzungsdaten zu generieren, um entsprechend sinnvolle Sicherheitsgrenzen zu formulieren. Da weder in der Biomechanik noch in der Rechtsmedizin der Fokus bisher wirklich auf leichten Verletzungen lag, ist es nötig, adäquate Kollisionstests durchzuführen, um die Beziehung zwischen "Eingangs-" roboterparametern, reflektierte Trägheit, Geschwindigkeit und Einschlagsgeometrie, und der resultierenden Verletzung zu erhalten. Da nicht jede mögliche Kontaktgeometrie getestet werden kann, werden in einem ersten Schritt relevante geometrische Primitive mit genügend Aussagekraft bestimmt. Hiernach wird eine große Zahl an Fallversuchen mit frischen Schweinebauchwandproben, bei verschieden Massen und Geschwindigkeit für gewisse Primitive durchgeführt. Die Analysen können auf weitere Körperteile ausgeweitet werden. Jedoch erzeugen die bisherigen Versuche bereits eine enorme Menge an Daten, und so würden noch mehr Experimente ein wenig die Essenz der Arbeit verschleiern. Deshalb wird vorliegend eine einzige Körperregion untersucht. Die möglicherweise verursachte Verletzung wird dann nach folgendem Schema medizinisch beurteilt:

1) Unmittelbare medizinische Untersuchung des Kollisionsbereichs
2) Präparation und Verletzungsanalyse
3) Histopathologische Untersuchung

Anhand der so genannten AO-Klassifizierung wird die beobachtete Verletzung dann in standardisierte Verletzungsklassen eingeteilt. Vorliegend werden drei ausgewählte Primitive auf Basis von Hunderten Fallversuchen ausgewertet. Vorliegend liegt der Fokus eher darauf, eine Herangehensweise zu entwickeln, anstatt nur eine extrem große Menge an Rohdaten zu erzeugen. Es können Daten für mehr Primitive und Körperteile angehäuft werden. Um die funktionelle Beziehung *Roboterparameter → Verletzung* für die Roboterreglung und -steuerung nutzbar zu machen, werden Risikokurven für die gegebenen Primitive hergeleitet. Dies ermöglicht es, eine einfache und intuitive Repräsentation der Beziehung *Roboterparameter → Verletzung* herzuleiten, die dann in einer Realzeitdatenbank gespeichert werden kann. Das gesammelte Verletzungswissen steht nun in einer echtzeitfähigen Struktur zur Verfügung und kann in einen Geschwindigkeitsregler integriert werden. Der vorgeschlagene Regler beachtet die reflektierten Dynamiken des Roboters an relevanten Strukturpunkten, sowie deren Geschwindigkeit und Oberflächenbeschaffenheit. Das Framework erzwingt sicheres Kollisionsverhalten eines Roboters im Falle einer unerwarteten Kollision mit einem Menschen. Es sei über dies angemerkt, dass vorangegangene Arbeiten über stumpfe Kollisionsanalysen nahtlos in diese Algorithmik integriert werden können.

Medizinische Auswertung:

Im Folgenden werden die relevanten medizinischen Konventionen, sowie die durchgeführten Fallversuch-Experimente beschrieben. Im Anschluss werden Verletzungen, die während der Experimente beobachtet wurden, medizinisch beurteilt. Die medizinische Analyse wird in drei Phasen durchgeführt:

1) Unmittelbare Beobachtung nach dem Fallversuch
2) Makroskopische pathologisch-anatomische Analyse
3) Mikroskopische pathologisch-anatomische Analyse

Alle Phasen werden im Detail erläutert. Um ein besseres Verständnis für die Ergebnisse der Beobachtung zu erhalten, werden die Fallversuchsexperimente jedoch zuerst vorgestellt. Eine detaillierte Beschreibung des Versuchsaufbaus ist in der Veröffentlichung S. Haddadin, S. Haddadin, A. Khoury, T. Rokahr, S. Parusel, R. Burgkart, A. Bicchi, and A. Albu-Schäffer, "On making robots understand safety: Embedding injury knowledge into control," Int. J. of Robotics Research, 2012, beschrieben.

Fallversuchsexperimente:

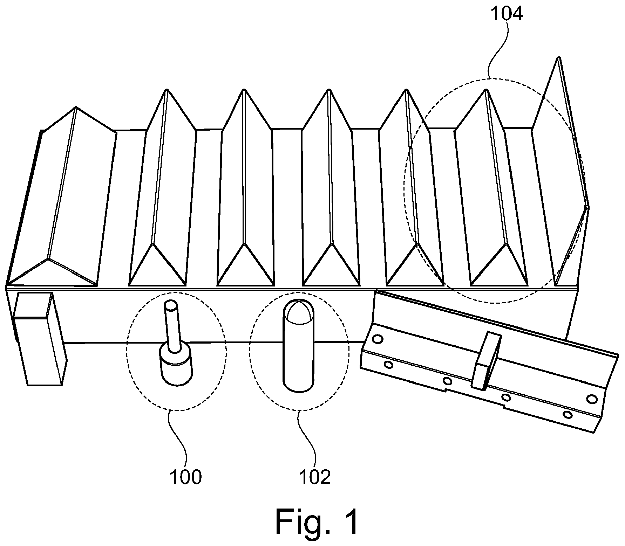

Für die experimentelle Verletzungsanalyse wurde ein Versuchsaufbau gewählt, der auf dem Prinzip des freien Falls basiert. Der Aufbau beinhaltet einen Kraftsensor sowie zwei Beschleunigungssensoren, die die Beschleunigung des Schlittens und des Impaktors messen und werden genutzt, die Aufprallgeschwindigkeit zu bestimmen. Der maximal auftretende Druck wird über eine Druckmessfolie gemessen.
Da eine große Auswahl an Kontaktgeometrien für solche Versuche in Frage kommt, wurde eine repräsentative Auswahl von Werkzeugen/Klassen erstellt. Fig. 1 zeigt eine Auswahl an Kontaktprimitiven für Weichteilexperimente. Die eingekreisten Primitive werden in den Versuchsreihen verwendet und sind vorliegend als kleine Sphäre 100, große Sphäre 102 und Keil 104 bezeichnet. Der jeweilige Entwurf basiert auf typischen geometrischen Primitiven aus industriellen Prozessen.
Die kleine Sphäre 100 weist einen Radius R =5 mm und eine Masse 2.1 kg auf. Die große Sphäre 102 weist einen Radius R =12.5 mm und eine Masse 2.2 kg auf. Der Keil 104 weist eine Keilwinkel von 45° mit Abrundungsdurchmesser r =0.2 mm, Breite L = 200 mm und eine Masse 2.7 kg auf.
Die gewählten Kontaktgeometrien decken bereits eine Vielzahl industrieller Greifer oder zu greifende Gegenstände ab. Im Folgenden wird die Analysemethodik erläutert, die für die medizinische Beurteilung beobachteter Verletzungen zum Einsatz kommt.

Analysemethodik:

1) AO-Klassifikation & Makroskopische Analyse: In der Medizin werden leichte Verletzungen in der Regel als sekundäre Begleitverletzungen von Frakturen behandelt. In diesem Sinne ist die AO-Klassifizierung der "Arbeitsgemeinschaft für Osteosynthesefragen" eine der international bedeutendsten. In diesem Zusammenhang wird auf die Veröffentlichung S. Haddadin, S. Haddadin, A. Khoury, T. Rokahr, S. Parusel, R. Burgkart, A. Bicchi, and A. Albu-Schäffer, "On making robots understand safety: Embedding injury knowledge into control," Int. J. of Robotics Research, 2012, verwiesen. Diese Klassifizierung ist teils auch bekannt als Müller- Klassifizierung, benannt nach dem Schweizer Chirurgen und Pionier der orthopädischen Chirurgie, Maurice Edmond Müller. Im englischen Sprachgebrauch ist sie häufig mit ASIF (Association for the Study of Internal Fixation) bezeichnet. Diese Klassifizierung zielt auf eine weltweit einheitliche und eindeutige Frakturbeschreibung des menschlichen Skeletts hin ab. Des Weiteren existiert eine Untergruppe in der AO-Klassifizierung, die sich mit Begleitverletzungen, wie z.B. Haut-und Weichteilverletzungen (Muskel, Bänder, Sehnen, Nerven und Gefäßen), beschäftigt. Diese Untergruppe wurde gewählt, um die experimentell verursachten Verletzungen präzise und objektiv beschreiben zu können. Der Zweck der AO-Klassifizierung ist die Verbesserung der Kommunikation zwischen Ärzten und die systematische Dokumentation und Forschung. So sollen folglich sinnvolle Therapieansätze gewählt werden, die auf angemessenen, klar beschriebenen und einfach zugänglichen Daten basieren, und so die Grundlage der heutigen Evidencebased Medicine bilden. Die Gruppierung der AO-Klassifizierung, die vorliegend genutzt werden sind:

1) Hautverletzungen (I)
2) Muskel- und Sehnenverletzungen (MT) und
3) Gefäß- und Nervenverletzungen (NV).

Über dies sind diese Klassen sind wie folgt unterteilt.

Hautverletzung bei geschlossener Fraktur:

IC1: Keine Hautverletzung
IC2: Prellung ohne Hautöffnung
IC3: Umschriebenes Décollement
IC4: Ausgedehntes, geschlossenes Décollement
(IC5: Nekrose aufgrund von tiefer Prellung)

Offene Hautverletzung:

(IO1: Hautdurchspießung von innen nach außen)
IO2: Hautdurchspießung von außen < 5 cm mit geprellten Rändern
IO3: Hautläsion > 5 cm, umschriebenes Décollement mit Randprellung
IO4: Hautverlust, tiefe Prellung, Abschürfung
IO5: (Ausgedehntes Décollement)

Muskel- und Sehnenverletzungen:

MT1: Keine Verletzung
MT2: Umschriebene Muskelverletzung (auf eine Muskelgruppe beschränkt)
MT3: Ausgedehnte Muskelbeteiligung (in zwei oder mehr Muskelgruppen)
(MT4: Ausriss oder Verlust ganzer Muskelgruppen, Sehnendurchtrennungen)
(MT5: Logen-oder Crush-Syndrom)

Neurovaskuläre Verletzungen:

NV1: Keine Verletzung
NV2: Isolierte Nervenläsion
NV3: Umschriebene Gefäßverletzung
NV4: Kombinierte neurovaskuläre Verletzung (NV5: Subtotal-/Totalamputation)

Vorliegend wird IC2 als geeigneter Grenzwert angesehen und als Indikator der "Schlüsselkollision" gekennzeichnet. Zusätzlich zur Beurteilung anhand der AO-Klassifikation werden die Breiten, Längen und Tiefen auftretender Läsionen manuell mit einem Messschieber erfasst. Zu Dokumentationszwecken wurden Fotos jeder Probe vor und nach jeder Testreihe erstellt. Im Anschluss an jeden Aufprall folgte eine vorläufige Observation und Beurteilung. Nach Beendigung einer Versuchsreihe wird die Probe vom Testaufbau für eine gründlichere Untersuchung entfernt. Zuerst werden die Hautoberfläche betrachtet und entsprechend IC 1-5 oder IO 2-5 klassifiziert. Wenn keine offensichtliche Hautöffnung festgestellt werden kann, werden 1 cm$^3$-Proben entnommen und für spätere mikroskopische Untersuchungen in Formalin fixiert. Das Ziel der mikroskopischen Analyse ist eine detaillierte Unterscheidung was durch eine ausschließlich makroskopische Analyse unter Umständen nicht möglich wäre. Abdominelles Bauchwandgewebe wird als erstes experimentelles Gewebe gewählt, da es vergleichsweise einfach ist, Fallversuche mit äquivalenten Kollisionsbedingungen zu fahren.

Ergebnisse:

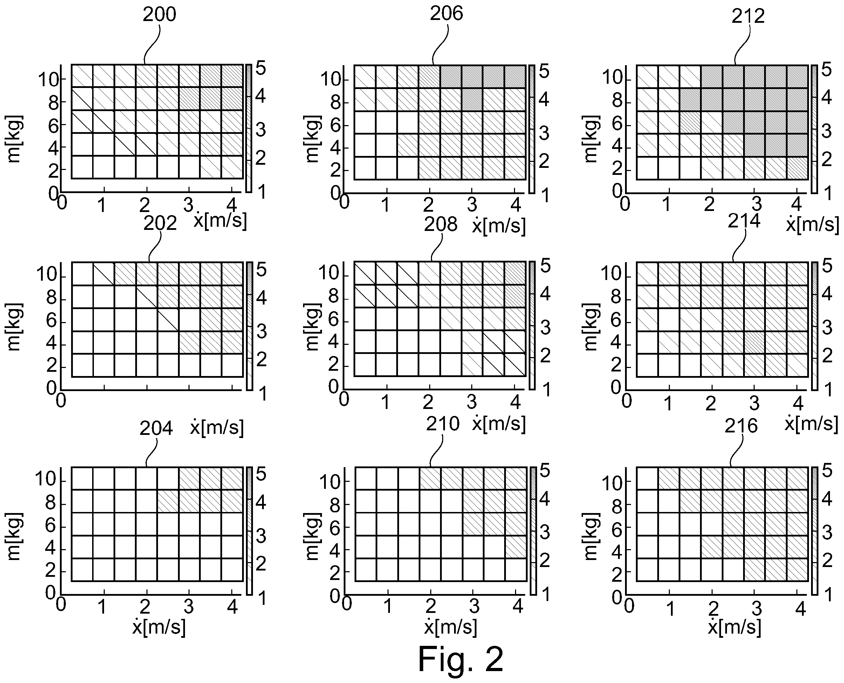

Es sei darauf hingewiesen, dass die nun dargestellte Beurteilung eine Zusammenfassung der Beobachtungen ist, die insbesondere dem weiter unten beschriebenen Reglerentwurf dienen sollen, statt der Interpretation der Ergebnisse. Fig. 2 fasst die gewonnenen Risikokennlinien, die aus den Versuchen gewonnen wurden, zusammen und zeigt eine Abhängigkeit einer AO-Klassifikation von Kollisionsmasse und -geschwindigkeit für unterschiedliche Kontaktprimitive. Die erste Spalte zeigt mit Diagrammen 200, 202, 204 eine Abhängigkeit einer AO-Klassifikation von Kollisionsmasse und -geschwindigkeit für einen Keil, vgl. Fig. 1 und zugehörige Beschreibung, die mittlere Spalte zeigt mit Diagrammen 206, 208, 210 eine Abhängigkeit einer AO-Klassifikation von Kollisionsmasse und -geschwindigkeit für eine große Sphäre, vgl. Fig. 1 und zugehörige Beschreibung, und die rechte Spalte zeigt mit Diagrammen 212, 214, 216 eine Abhängigkeit einer AO-Klassifikation von Kollisionsmasse und -geschwindigkeit für eine kleine Sphäre, vgl. Fig. 1 und zugehörige Beschreibung. Die obere Reihe zeigt mit Diagrammen 200, 206, 212 die Resultate für geschlossene Hautverletzungen, die mittlere Reihe zeigt mit Diagrammen 202, 208, 214 die Resultate für Muskel- und Sehnenverletzungen und die untere Reihe zeigt mit Diagrammen 204, 210, 216 die Resultate für neurovaskuläre Schäden.

Wie bereits erwähnt, wird jedem Impaktor, jeder Geschwindigkeit sowie Masse eine Schlüsselkollision zugewiesen. Die Schlüsselkollision ist die maximal zulässige Verletzung die auftreten darf. Sie wird vorliegend als Prellung definiert. Diese Definition ist natürlich nicht ausreichend sobald die Haut zwar vollkommen intakt, unterliegendes Gewebe jedoch verletzt ist. Dies ist insbesondere der Fall, wenn Nerven und Arterien involviert sind. Die dritte Klasse von Weichteilverletzungen, neurovaskuläre Schäden, sind stets im Falle durchdringender Muskelverletzungen möglich, da größere neurovaskuläre Strukturen unter den Muskeln liegen. Folglich wird die Schlüsselkollision entsprechend der geschätzten Verletzung des Menschen ausgewählt, die vollständig heilbar ist (restitutio ad integrum), d.h. keine dauerhafte Schäden hinterlässt. Im Falle nicht eindeutiger Ergebnisse wird die Schlüsselkollision über die konservativste Interpretation festgelegt. Die Ergebnisse des Fallversuchs werden dann in eine Echtzeitrobotersteuerung integriert, wie weiter unten beschrieben. Jedes medizinische Ergebnis wird in die Verletzungs-Datenbank integriert, die weiter unten genauer beschrieben ist.

In Fig 2 sind die Zusammenhänge zwischen Masse, Geschwindigkeit und Verletzung für 276 Fallversuche dargestellt. Jedem Impaktor, Keil, große Sphäre, kleine Sphäre, ist eine Spalte zugeordnet, in der Hautverletzungen, Muskel- und Sehnenverletzungen und neurovaskuläre Verletzungen dargestellt sind. Die Schwere der Gewebsverletzung (diese reicht von eins bis fünf im Sinne der AO-Klassifikation) wird durch graustufige, rechteckige Felder repräsentiert. Weiße Flächen stellen Aufschläge ohne Verletzung (IC1, MT1, oder NV1) dar. Schwarze Flächen repräsentieren die schwerstmögliche Verletzung. Zu beachten ist hierbei, dass in dem Diagramm 212 sowohl geschlossene Hautverletzungen, als auch offene in einem Graphen dargestellt werden. Hierbei kennzeichnen schwarze Flächen offene Hautverletzungen und nicht geschlossene Verletzungen mit IC5 (Nekrose aufgrund tiefer Prellung).

Hautverletzungen, die durch den keilförmigen Impaktor verursacht werden sind auf Prellungen und geschlossene Décollements begrenzt. Lediglich Massen > 8 kg und Aufprallgeschwindigkeiten von mind. 3.0 m/s führten zu größeren Prellungen und Décollements. Die schwerwiegendsten Verletzungen für die große Sphäre sind kleine Abrisse von $\approx$ 10 mm$^2$. Bei Geschwindigkeiten unterhalb 2 m/s verursacht die große Sphäre nur geringe Hautverletzungen. Weder die große Sphäre noch der Keil konnten die Haut vollständig durchdringen, was sowohl durch makroskopische als auch mikroskopische Analyse verifiziert wurde. Die kleine Sphäre durchdringt die Haut hingegen bei vergleichsweise kleinen Geschwindigkeiten und Massen. Sicherheit bei abdominellen Kollisionen kann nur für Geschwindigkeiten < 2 m/s und Massen < 6 kg garantiert werden. Die Keil-Aufprälle hinterließen vernachlässigbare Muskelverletzungen für alle Versuche bis 1.5 m/s. Selbst oberhalb dieser Geschwindigkeit können die meisten Verletzungen als harmlos angesehen werden.

Der Keil hat folglich eine relativ große Sicherheitsspanne für Muskelgewebe. Muskelverletzungen für die große Sphäre mit > 8 kg können bis 1.5 m/s als erträglich angesehen werden. Die Ergebnisse für die kleine Sphäre zeigen eine ähnliche Verletzungsschwere im Muskelgewebe. Die maximale Geschwindigkeit sollte 1.5 m/s nicht übersteigen. Mit zusätzlichem Gewicht sollte sie auf < 1.0 m/s begrenzt werden. Wie bereits oben erwähnt, werden neurovaskuläre Verletzungen entsprechend der Muskeldurchdringung ausgewählt. Eine Untersuchung dieser Art von Verletzungen erfolgt vorliegend jedoch nicht, da eine adäquate Auswertung von totem Gewebe nicht durchführbar ist.

Es wird darauf hingewiesen, dass alle durchgeführten Experimente bestimmten Bedingungen entsprechen, die von realen Mensch-Roboter Kollisionen abweichen. Diese können hauptsächlich der Verwendung von totem Gewebe zugeordnet werden. Im Vergleich zu lebendem Gewebe fehlen diesem mehrere Eigenschaften wie Muskelspannung, Vorspannung der Haut und natürlich die Möglichkeit auszuweichen. Ferner ist es nicht möglich funktionelle Schäden, wie z.B. arterielle/venöse Blutungen, Schmerz oder neurologische Ausfälle, zu untersuchen. Nichtsdestotrotz spiegeln die durchgeführten Experimente und deren Ergebnisse eher ein Worst-Case-Szenario wieder als mögliche Folgen zu mildern. Weiter unten werden Sicherheitskurven abgeleitet, die für eine Realzeitauswertung geeignet sind, sodass ein Roboter in der Lage ist, auf Basis seines derzeitigen Zustandes (reflektierte Trägheit, instantane Geschwindigkeit und Oberfläche) auf sein potentielles Verletzungsrisiko im Falle unerwarteter Kollisionen zu schließen. Es wird aufgezeigt, wie diese Repräsentation in einer geschlossenen Regelschleife genutzt werden kann, sodass der Roboter die entsprechenden medizinischen Grenzwerte nicht überschreitet.

Wissensbasierte Echtzeitsteuerung:

Sicherheitskennlinien für Robotersteuerung:

Das Ziel der vorliegenden Analyse ist zu verstehen, wie Weichteilgewebe unter unterschiedlichen Kollisionsversuchsbedingungen reagiert und geeignete Modellparameter zu finden, die es erlauben, das Auftreten einer bestimmten Verletzung zu prädizieren und dieses Wissen in eine Steuerung für sichere Robotergeschwindigkeit zu integrieren. Obwohl zusätzliche experimentelle Daten hilfreich sind, um die Abbildung (Masse, Geschwindigkeit, Geometrie) → Verletzung vollständig zu verstehen, ist eine solche vollständige Charakterisierung von Weichteilgewebe sicherlich nicht nötig für Robotikanwendungen: Die Prädiktion von Geschwindigkeitsgrenzen für sehr kleine Massen (< 1 kg) ist aus zweierlei Gründen nicht wichtig:

Untere Grenze: Die reflektierte Trägheit für Roboter, die typischerweise in interaktiven Anwendungen eingesetzt werden, ist wesentlich größer, vor allem, wenn der Roboter mit einem Greifer/Hand und/oder Werkzeugen ausgestattet ist.

Obere Grenze: Ein Roboter, der sich in unmittelbarer Nähe eines Menschen befindet und/oder mit diesem kooperativ zusammen arbeitet, sollte mit Sicherheit 4- 5 m/s nicht überschreiten. Es wurde bereits gezeigt, dass $\approx 2 m/s$ eine angemessene maximale Grenzgeschwindigkeit ist. Diese Grenze wurde aus Experimenten zu stumpfen Kollisionen mit dem Kopf abgeleitet.

Ferner ist eine Evaluierung von Geschwindigkeitsgrenzen für große Massen (> 20 kg) nicht von wesentlichem Interesse in der Servicerobotik, weil Roboter, die sicher mit einem Menschen interagieren sollen, typischerweise eine Leichtbaukonstruktion aufweisen und daher eine reflektierte Trägheit im Bereich 1-15 kg haben, und es im Falle sehr großer reflektierter Trägheiten (z.B. in der Nähe von Singularitäten) keinen Sinn macht, die Geschwindigkeit unter einen gewissen Wert zu reduzieren oder gar die Bewegung zu stoppen. Singularitäten werden an dieser Stelle nicht berücksichtigt. Diese müssen auf eine andere Art und Weise analysiert werden. Während die reflektierte Masse unendlich erreicht, strebt die Geschwindigkeit gegen Null, d.h. die kinetische Energie wird begrenzt.

Schlussendlich erscheint es angemessen, eine maximale zulässige Geschwindigkeit für geringe Massen festzusetzen (z.B. 4.5 m/s) und eine minimale Geschwindigkeitsgrenze (z.B. 0.1 m/s) zu definieren, um ein Anhalten in der Nähe von Singularitäten zu verhindern. Daher sind alle benötigten Informationen aus den Testresultaten gewonnen.

Die letzte ausstehende Frage ist, welche Repräsentation die Grenzen in der Masse-Geschwindigkeits-Kennlinien wiederspiegelt. Initial würde man eine Beschreibung im Sinne physikalischer Größen wie kinetische Energie, Kontaktkraft oder Impuls wählen. Da jedoch eine medizinische Beurteilung anhand der AO-Klassifikation vorliegt, bedarf die Verletzungspräsikation keines physikalischen Modells, sondern ist ausschließlich datengetrieben. Aufgrund der Komplexität menschlicher Verletzungsmechanismen können somit konsistentere Ergebnisse erzielt werden als mit einem modellbasierten Ansatz, der Validierung erfordert und potentiell größere Ungenauigkeiten aufweist. Insofern können sämtliche Messungen physikalischer Größen während eines Versuchs als ergänzende Informationen angesehen werden. Sie werden jedoch nicht für sie Abbildung (Masse, Geschwindigkeit, Geometrie) → Verletzung (eines bestimmten Körperteils) erforderlich. Nachdem Masse und Geschwindigkeit zu "Schlüsselkollision" für Experimente am Abdomen zugewiesen wurden, sind die resultierenden Sicherheitskurven des Abdomens für die Experimente einfach drei Regressionskurven in der (Massen, Geschwindigkeit)-Ebene für ein gegebenes Kollisionsprimitiv. Die maximal zulässige Geschwindigkeit kann folgendermaßen ausgedrückt werden.

$$v_{\max}(m) = reg.lim\left[c_1(i, \mathbf{a}_i)m + c_2(i, \mathbf{a}_i), v_1, v_2\right], \quad (1)$$

mit dem Koeffizienten der Sicherheitskennlinien $c_1(i, a_i) < 0$ und $c_2(i, a_i)$ für das Primitiv i. Die Parameter $v_1$, $v_2$ sind die minimal und maximal zulässige Geschwindigkeit. Es sei nochmals betont, dass für die Abgrenzung der Sicherheits-Kennlinien für die Robotersteuerung kein Kraftsensor notwendig ist. Es ist lediglich die Kenntnis notwendig, bei welcher Geschwindigkeit für eine variierende Masse eine medizinisch nachweisbare Verletzung auftritt (d.h. die Abbildung von Masse, Geschwindigkeit und Geometrie zu medizinisch beobachtbarer Verletzung.). Die Sensordaten können hingegen für Anwendungen verwendet werden, die diese explizit erfordern, wie z.B. kraftgesteuerte Aufgaben zur Prädiktion von Kontaktkräften.

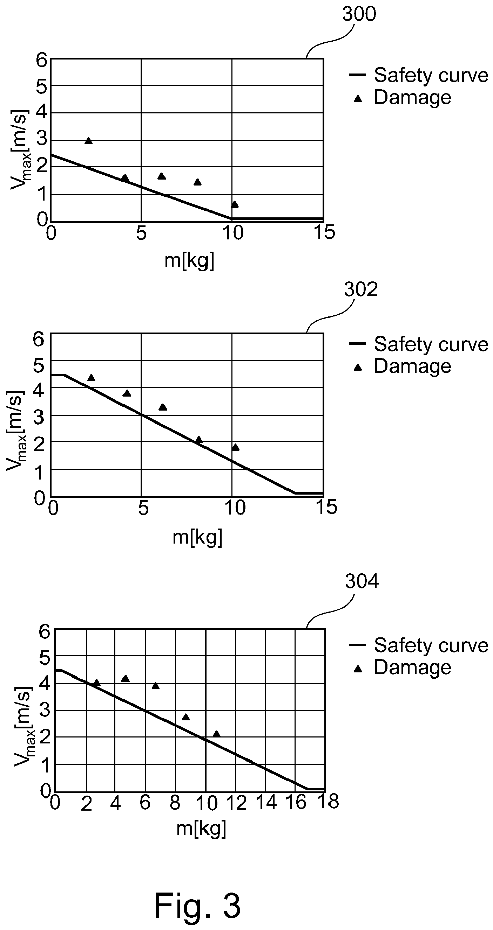

Fig. 3 zeigt konservative Sicherheitskennlinien für die Kontaktprimitiven kleine Sphäre in einem Diagramm 300, große Sphäre in einem Diagramm 302 und Keil 45° in einem Diagramm 304, die in der Echtzeitsteuerung eingesetzt werden, für den abdominalen Bereich.

Maximale Geschwindigkeiten werden im Bereich 0.1 - 4.5 m/s evaluiert. Die resultierenden Kennlinien werden anschließend konservativ verschoben, sodass alle Datenpunkte oberhalb der entsprechenden Grenze liegen. Diese Kennlinien bilden die Basis, um interpretierbares Wissen über Verletzungsmechanismen in Echtzeit-Robotersteuerungen zu integrieren, was nachfolgend beschrieben wird.

Verletzungsdatenbank:

Die beschriebenen Ergebnisse der Kollisionstests liefern Sicherheitskurven, die die maximale Geschwindigkeit und Masse mit der Verletzung für ein bestimmtes Primitiv und Körperteil in Verbindung setzten, siehe Fig. 3. Vorliegend wird darauf gezielt, einem Roboter zu erlauben, dieses Wissen zur Geschwindigkeitslimitierung beweglicher Teile so einzusetzen, dass unabsichtliche Kollisionen nicht einen gegebenen Grenzwert im Sinne der AO-Klassifikation, vorliegend IC2, überschreiten. Um größtmögliche Geschwindigkeiten unter Erfüllung einer bestimmten Sicherheitsbeschränkung zu erreichen, muss die Abbildung (Masse, Geschwindigkeit) beobachtete Verletzung online verfügbar gemacht werden. Solch eine Verletzungsdatenbank speichert die Koeffizienten der Sicherheitskennlinien (1) für jedes bekannte Kontaktprimitiv, sodass diese in Echtzeit zur Geschwindigkeitsanpassung verwendet werden können. In der Praxis können Endeffektoren oder relevante Roboterstrukturen nicht nur durch ein einziges Kontaktprimitiv repräsentiert werden. Diese sind eher komplexe geometrische Objekte mit variierender Charakteristik. Aufgrund dieser Vielzahl ist es natürlich unpraktisch jeden Endeffektor/Roboter separat zu behandeln. Um ein methodisches Vorgehen zu entwickeln, werden Endeffektoren formal als Gruppe geometrisch gekoppelter Primitive zerlegt.

Die gesamte geometrische Struktur der zerlegten Endeffektoren ist über relative Transformationsmatrizen $^{EE}T_{Obj}$ zwischen Endeffektor und Primitivobjektreferenzkoordinatensystem. Die jeweiligen geometrischen, dynamischen (gewonnen aus CAD-Model, dynamischer Identifikation, Lernen, etc.) und Sicherheits-Eigenschaften beschrieben die Roboterhülle adäquat. Es ist zu beachten, dass vorliegend kein Algorithmus für die automatische Erstellung dieser Relation geben wird. Jeder relevante Punkt, der überwacht werden soll, ist definiert als point of interest (POI). Jedes Primitivobjekt besteht aus einer Menge von POIs, der Position des Massenschwerpunkts $^{Obj}x_{COG}$, der Masse m, dem Inertialsensor I und der relativen Position zum Endeffektor $^{EE}T_{Obj}$.

Folgende Eigenschaften sind mit jedem POI assoziiert. Erstens, seine relative Pose in Relation zum Primitivobjekt-Referenzkoordinatensystem $^{Obj}T_{POI}$. Zweitens, eine Menge geometrischer Parameter PARAMS, die das Oberflächenprimitiv SURFACE repräsentieren. Drittens, ein Identifikator SC-TYPE, der die Art der Sicherheitskurve, vorliegend begrenzte Regression. Viertens, eine Menge an Koeffizienten COEFF, die die entsprechende Sicherheitskurve beschreiben. Zusammen bilden COEFF; PARAMS und SC-TYPE die Struktur PRIMITIVE für jeden POI.

Die resultierende Datenbank ist wie folgt formal repräsentiert.

$$SoEEs = \{SoObjects^k \times \{^{EE}T_{Obj}\}^k\}$$
$$^{EE}T_{Obj} \in SE(3)$$
$$SoObjects = \{POI^m \times \mathbb{R}^3 \times \mathbb{R}^+ \times \mathbb{R}^{3\times3}\}$$
$$POI = \{^{Obj}T_{POI} \times PRIMITIVE\}$$
$$^{Obj}T_{POI} \in SE(3)$$
$$PRIMITIVE = \{COEFF \times PARAMS \times SC-TYPE\}$$
$$COEFF \in SoC(SC-TYPE)$$
$$PARAMS \in SoP(SURFACE)$$

$$(2)$$

SoEEs ist die Menge von Endeffektoren und SoObjects ist die Menge von Primitivobjekten.

Da die Verletzungsdatenbank lediglich Relationen zwischen skalarer Masse, Geschwindigkeit und Verletzung beinhaltet, muss für eine vorgegebene Bewegung die instantane reflektierte Masse eines gegebenen POI und seine Sollgeschwindigkeit berechnet werden. So kann die gespeicherte Information so genutzt werden, dass die Sollgeschwindigkeit derart skaliert wird, dass sie unter (1) im Sinne potentieller Verletzungsgefahr reduziert wird.

Dynamik basierte Geschwindigkeitsskalierung in Realzeit:

1) Reflektierte Masse an POI: Die Dynamik eines starren Roboters im Gelenkraum ist beschrieben durch

$$M(\mathbf{q})\ddot{\mathbf{q}} + C(\mathbf{q},\dot{\mathbf{q}})\dot{\mathbf{q}} + \mathbf{g}(\mathbf{q}) \;=\; \tau, \qquad (3)$$

wobei $q \in R^n$ der Vektor der Gelenkwinkel, $M(q) \in R^{n\times n}$ die Trägheitsmatrix, $C(q,\dot{q})$ die Zentrifugal- und Coriolismatrix, $g(q)$ der Gravitationsvektor und $\tau$ das Gelenkdrehmoment sind. Die Beziehung zwischen Gelenkgeschwindigkeiten und kartesischen Geschwindigkeiten ist gegeben durch $\dot{x} = J(q)\dot{q}$, wobei $J(q) \in R^{6\times n}$ die entsprechende Jacobimatrix ist. $M(q)$ und die kartesische kinetische Energiematrix A(x) hängen folgendermaßen zusammen

$$\Lambda(\mathbf{x}) = \left(J(\mathbf{q})M(\mathbf{q})^{-1}J^T(\mathbf{q})^{-1}\right). \qquad (4)$$

In diesem Zusammenhang wird auf die Veröffentlichung O. Khatib, "Inertial properties in robotic manipulation: an object-level framework," Int. J. Robotics Research, vol. 14, no. 1, pp. 19-36, 1995, verwiesen.

Basierend auf einer Zerlegung der kinetischen Energiematrix ergibt sich die Inverse

$$\Lambda^{-1}(\mathbf{q}) \;=\; \left[ \begin{array}{cc} \Lambda_v^{-1}(\mathbf{q}) & \overline{\Lambda}_{v\omega}(\mathbf{q}) \\ \overline{\Lambda}_{v\omega}^T(\mathbf{q}) & \Lambda_\omega^{-1}(\mathbf{q}) \end{array} \right]. \qquad (5)$$

Es wird eine skalare Größe erhalten die, gegeben eine Kraft in u-Richtung, die wahrnehmbare Masse am Endeffektor repräsentiert, wobei u ein Einheitsvektor ist. Diese Größe wird reflektierte Roboterträgheit Richtung u genannt. Es ist zu beachten, dass die Jacobimatrix die entsprechende Schwerpunkts-Jacobi sein muss, oder ansonsten die vollständige Inverse aus Gleichung (5) herangezogen werden muss und nicht nur der translatorische Anteil.

$$m_u = [\mathbf{u}^T \Lambda_v^{-1}(q)\mathbf{u}]^{-1} \qquad (6)$$

Entsprechend der Ergebnisse des Fallversuchs wird $m_u$ benötigt, um die maximal zulässige kartesische Geschwindigkeit in u-Richtung zu bestimmen, die die Sicherheits-Kennlinie erfüllt, siehe Fig. 3.

Als nächstes wird die maximal zulässige Geschwindigkeit eines kartesischen Punktes abgeleitet, was die Grundlage für die Berechnung der sicheren Robotergeschwindigkeit ist.

2) Verletzungsbasierte Geschwindigkeitsskalierung: Folgendes Schema führt zu einer sicheren Geschwindigkeit für einen beliebigen POI. Es ist zu beachten, dass alle Indizes weglassen wurden, um eine klare Schreibweise zu erhalten. Außerdem ist die Abhängigkeit von *q* weggelassen, wenn sie offensichtlich ist. Das Basiskoordinatensystem des Roboters wird mit {0} gekennzeichnet, das des Endeffektors (operational frame) mit {EE}.

1) Werte Einheitsvektor u aus der senkrecht auf der Objektoberfläche von POI steht (Richtung z-Achse in POI-Koordinaten),

$$\mathbf{u} = {}^{0}R_{POI}\mathbf{z}_{POI} \qquad (7)$$

wobei ${}^{0}R_{POI}$ die Rotationsmatrix von POI-Koordinaten in {0}-Koordinaten ist.

2) Berechne ${}^{0}v_{POI}$ auf Basis von Endeffektorsollgeschwindigkeit ${}^{0}v_{EE_d} = [{}^{0}\dot{x}_{EE_d} \; {}^{0}\omega_{EE_d}]^{T}$.

$$ {}^{0}\mathbf{v}_{POI} = \begin{bmatrix} {}^{0}\dot{\mathbf{x}}_{POI} \\ {}^{0}\boldsymbol{\omega}_{POI} \end{bmatrix} = \begin{bmatrix} I_3 & -\hat{\mathbf{p}}_{POI} \\ 0_3 & I_3 \end{bmatrix} \begin{bmatrix} {}^{0}\dot{\mathbf{x}}_{EE_d} \\ {}^{0}\boldsymbol{\omega}_{EE_d} \end{bmatrix}, \qquad (8) $$

wobei $p_{POI} = [p_{x},POI \; p_{y},POI \; p_{z},POI]^{T}$ der Positionsvektor des POI in Bezug auf {EE} ist. Die Matrix $\hat{p}_{POI}$ ist

$$ \hat{\mathbf{p}}_{POI} = \begin{bmatrix} 0 & -p_{z,POI} & p_{y,POI} \\ p_{z,POI} & 0 & -p_{x,POI} \\ -p_{y,POI} & p_{x,POI} & 0 \end{bmatrix}. \qquad (9) $$

3) Auswertung der Inversen der kartesischen kinetischen Energiematrix am POI:

$$ \Lambda_{v,POI}^{-1} = J_{v,POI} M^{-1} J_{v,POI}^{T} \qquad (10) $$

4) Reflektierte Trägheit in u-Richtung durch (6):

$$ m_{POI} = 1/(\mathbf{u}^{T}\Lambda_{v,POI}^{-1}\mathbf{u}) \qquad (11) $$

5) Ableitung der maximalen Geschwindigkeit $v_{max}$ für $m_{POI}$ unter Verwendung der Sicherheitsfunktionen.

$$ v_{\max}(m) = reg.lim\left[c_1(i,\mathbf{a}_i)m + c_2(i,\mathbf{a}_i), v_1, v_2\right], \qquad (12) $$

6) Vergleich von $v_{max}$ und der Projektion von ${}^{0}v_{POI}$ in u-Richtung $v_{ort}$: wenn $\|v_{ort}\| \leq \|v_{max}\|$, bleibt die Sollgeschwindigkeit erhalten. Wenn $\|v_{ort}\| > \|v_{max}\|$ ist neue Geschwindigkeit ${}^{0}v'_{POI}$

$$ {}^{0}\mathbf{v}'_{POI} = {}^{0}\mathbf{v}_{POI}\frac{\|\mathbf{v}_{\max}\|}{\|\mathbf{v}_{ort}\|}. $$

7) Schlussendlich ist die neue Geschwindigkeit ${}^{0}v_{EE}$ des Endeffektors

$$ {}^{0}\mathbf{v}_{EE} = \begin{bmatrix} {}^{0}\dot{\mathbf{x}}_{EE} \\ {}^{0}\boldsymbol{\omega}_{EE} \end{bmatrix} = \begin{bmatrix} I_3 & \hat{\mathbf{p}}_{POI} \\ 0_3 & I_3 \end{bmatrix} \begin{bmatrix} {}^{0}\dot{\mathbf{x}}'_{POI} \\ {}^{0}\boldsymbol{\omega}'_{POI} \end{bmatrix}. \qquad (13) $$

Diese Prozedur wird für jeden POI wiederholt. Die konservativste Geschwindigkeit ${}^{0}v_{EE}$ wird als ${}^{0}v'_{EE}$ ausgewählt.

Im Folgenden werden einige Experimente diskutiert, die das Systemverhalten in einfachen Von-Position-A-nach-Position-B-Bewegungen verdeutlichen. Hierfür wurde ein artikulierter Manipulator mit einem Endeffektor ausgestattet, der aus den drei Primitiven zusammengesetzt ist, die zuvor für Fallversuchsexperimente verwendet wurden.

Experiment:

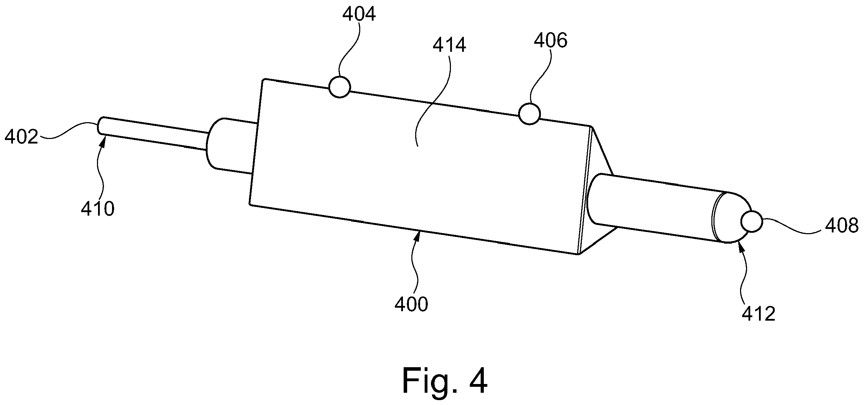

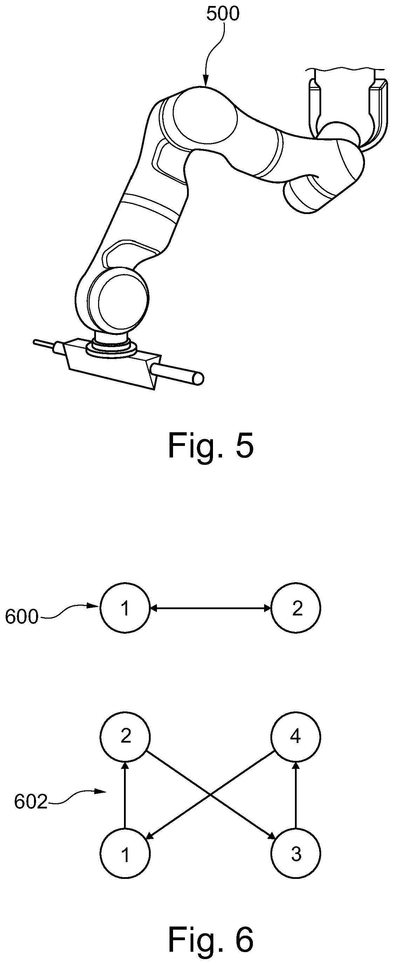

Fig. 4 zeigt einen Endeffektor 400 bestehend aus Kontaktprimitiven und assoziierten POIs 402, 404, 406, 408. Fig. 5 zeigt einen Roboter 500 mit dem Endeffektor 400 zur Durchführung von Experimenten. Um die Leistungsfähigkeit des entwickelten verletzungsbasierten Algorithmus zu zeigen, wird der Leichtbauroboter 500 mit dem Endeffektor 400 ausgestattet, der aus den geometrischen Primitiven besteht, die für die Fallversuche zum Einsatz kamen, siehe Fig. 4 und Fig. 5. Für diesen Endeffektor 400 wurden vier POIs 402, 404, 406, 408 ausgewählt: Zwei (402, 408) auf den Spitzen der Sphären 410, 412 und zwei (404, 406) auf dem Keil 414. Für den Keil 414 müssen zwei POIs 404, 406 verwendet werden, da die Breite des Keils 414 einen signifikanten Einfluss während einer Drehbewegung hat. Wenn z.B. zwei POIs 404, 406 auf der Kante des Keils gewählt werden, dann ist einer von ihnen zweifellos der schnellste Punkt des Primitivs.

Die durchgeführten Experimente können jedoch nicht als Verletzungswissensquelle für die Ecken des Keils 414 herangezogen werden, da die entsprechende Analyse noch durchgeführt werden muss. Als Kompromiss werden die beiden POI 404, 406 den distalen Enden des Primitivs zugewiesen, wobei die Geschwindigkeitsdifferenz im Vergleich zu den Ecken vernachlässigbar ist. Da der Roboter 500 explizit für feinfühlige und sichere Interaktion entwickelt wurde, ist die Leichtbauweise eine seiner wichtigsten Eigenschaften.

Da der Roboter 500 mit den gegebenen Werkzeugen, gegeben seine Maximalgeschwindigkeit und Trägheitseigenschaften, nicht in der Lage ist potentiell "unsichere" Bewegungen zu erzeugen, werden die Sicherheits-Kennlinien soweit verschoben, dass der Effekt des sicheren Geschwindigkeitsreglers (SVC) auch für diesen Manipulator sichtbar wird, Skalierungsfaktor 0.2.

Es werden Experimente für zwei verschiedene Bewegungsarten durchgeführt. Fig. 6 zeigt Trajektorien eines Linientests 600 und eines Ribbontests 602. Im Linientest 600 bewegt sich der Endeffektor 400 seitlich ($^0$y-Richtung) zwischen zwei Positionen. Im Ribbontest 602 fährt der Roboter 400 über Kreuz vier verschiedene Positionen an und kombiniert dabei vertikale und horizontale Bewegungen.

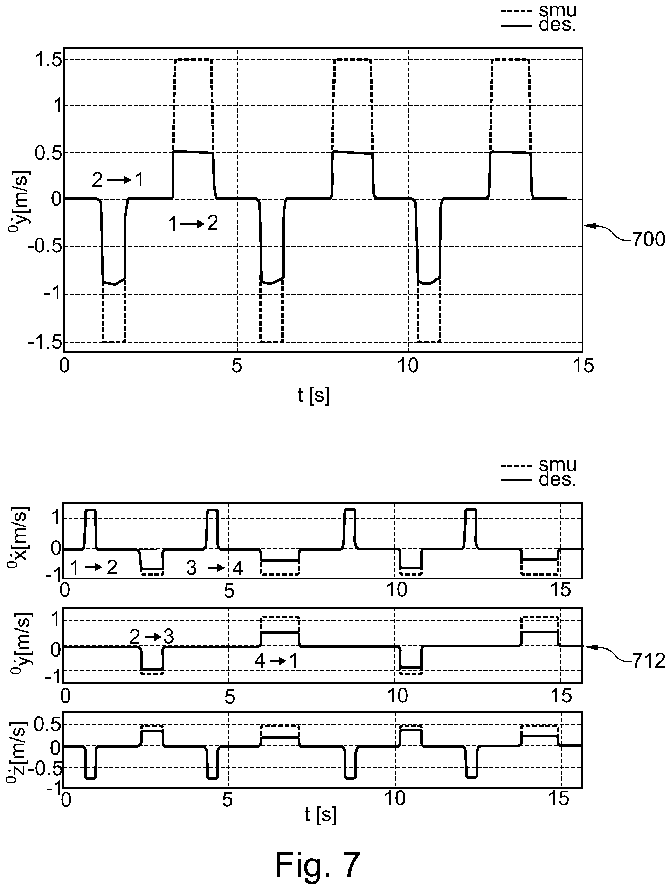

Fig. 7 zeigt ein SVC-Experiment "line test" und "ribbon test". Mit dem Diagramm 700 sind die Ergebnisse des Linientests 600 dargestellt. Der Endeffektor 400 soll sich mit einer Geschwindigkeit von 1.5 m/s zwischen zwei Zielfigurationen bewegen. Der SVC limitiert jedoch die Geschwindigkeit in Abhängigkeit der reflektierten Trägheit und Bewegungsrichtung des Roboters 400. Während der Bewegung in positive $^0$y-Richtung ist POI 402 der kritische POI und POI 408 in negative Richtung.

Da die Sicherheits-Kennlinie, die POI 402 zugewiesen ist, restriktiver ist als die von POI 408 (die kleine Sphäre ist gefährlicher als die große Sphäre), reduziert der SVC die maximale Geschwindigkeit stärker in positive $^0$y-Richtung. In dem Diagramm 702 sind die Ergebnisse des Ribbontests 602 dargestellt.

Da das Koordinatensystem des Endeffektors ({0}-Koordinaten) gegenüber dem kartesischen Weltkoordinatensystem ({W}-Koordinatensystem) gedreht ist, wird die Geschwindigkeit für alle drei Dimensionen dargestellt. Seitliche Bewegungen werden als $^0$y- Richtung repräsentiert. Vertikale Bewegungen haben sowohl Einträge in $^0$x- als auch in $^0$z-Richtung.

Demnach entsprechen die Strecken 1-2 und 3-4 in Fig. 7 (Aufwärtsbewegung des Endeffektors 400) positiver $^0$x und negativer $^0$z-Richtung in Fig. 7. Im Gegensatz hierzu entsprechen die Strecken 2-3 und 4-1 negativer $^0$x und positiver $^0$z-Bewegungen. Für seitliche Bewegungen bedeuten die Strecken 2-3 und 4-1 negative und positive $^0$y-Bewegungen. In Fig. 7 kann beobachtet werden, dass der SVC die 4-1-Bewegung stärker einschränkt als die 2-3-Bewegung. Dies lässt sich dadurch erklären, dass in dieser Richtung POI 402 relevant ist, der mit der kleinen Sphäre assoziiert ist. Nichtsdestotrotz tragen auch POI 404 und POI 406 zur Geschwindigkeitsbegrenzung bei. Aufgrund der Symmetrie des Endeffektors 400 beeinflussen sie die Geschwindigkeitsgrenzen entlang 4-1 und 2-3 gleichermaßen. Abschließend kann beobachtet werden, dass die Geschwindigkeit in Aufwärtsbewegungen (1-2 und 3-4) bislang noch nicht vom Regler begrenzt wird. Dies lässt sich dadurch erklären, dass die POIs 402, 404, 406, 408 ausschließlich frontal und lateral zugewiesen wurden, und keiner am hinteren Teil des Endeffektors 400.

Zusammenfassung:

Vorliegend werden Fallversuchesexperimente bei variierender Masse, Geschwindigkeit und Oberflächengeometrie mit abdominellem Schweinebauch durchgeführt. Der Zweck der Untersuchung ist es, grundlegende Verletzungsdaten zu erzeugen, die weder in er Biomechanik, noch in der Forensik bisher existieren. Außerdem wird eine Vorgehensweise zur Nutzung medizinischer Bewertung und Klassifikation für die Erzeugung adäquater Repräsentation von Verletzungswissen vorgeschlagen, um so eine weitere algorithmische Prozessierung zu erlauben. Die Grundlage der Bewertung ist die sogenannte AO-Klassifikation. Im Allgemeinen erlaubt diese die objektive Beschreibung von Weichteilverletzung auf der Basis medizinischer Beobachtungen. IC2 (Kontusion ohne Hautöffnung) wird als maximal zulässige Verletzungsgrenze ausgewählte. Drittens werden Risikographen entworfen, die eine "sichere" Geschwindigkeit, gegeben eine instantane Konfiguration, Masse, Oberflächengeometrie und Kollisionskörperteil, repräsentieren. Überdies wird eine Realzeitverletzungsdatenbank-Architektur vorgeschlagen, die die erzeugten Ergebnisse in Echtzeit verfügbar macht. Schließlich wird eine Realzeitregler entworfen und experimentell verifiziert, der die Endeffektorgeschwindigkeit aufgrund der reflektierten Trägheit und den geometrischen Oberflächeneigenschaften des Endeffektors limitiert. Dieser stellt sicher, dass, durch die Ausnutzung des Wissens aus der Verletzungsdatenbank, eine mögliche Kollision mit dem Menschen (menschlichem Abdomen) keine Verletzungen oberhalb eines gewissen vordefinierten Grades erzeugen kann. Letztlich sei angemerkt, dass bereits existierende Arbeiten zu stumpfen Mensch-Roboter-Kollisionen sehr einfach in diese Architektur und Algorithmik integriert werden können, was den vorliegenden Ansatz sehr generisch macht.

Bezugszeichen

| | |
|---|---|
| 100 | kleine Sphäre |
| 102 | große Sphäre |
| 104 | Keil |
| 200 | Diagramm |
| 202 | Diagramm |
| 204 | Diagramm |
| 206 | Diagramm |
| 208 | Diagramm |
| 210 | Diagramm |
| 212 | Diagramm |
| 214 | Diagramm |
| 216 | Diagramm |
| 300 | Diagramm |
| 302 | Diagramm |
| 304 | Diagramm |
| 400 | Endeffektor |
| 402 | POI |
| 404 | POI |
| 406 | POI |
| 408 | POI |
| 410 | Sphäre |
| 412 | Sphäre |
| 414 | Keil |
| 500 | Roboter |
| 600 | Linientest |
| 602 | Ribbontest |
| 700 | Diagramm |
| 702 | Diagramm |

**Patentansprüche**

1. Verfahren zum Nutzbarmachen von biomechanischem und/oder medizinischem Wissen zur Steuerung einer Robotereinrichtung (500), **dadurch gekennzeichnet, dass** zwischen einer Kollisionsmasse, einer Kollisionsgeschwindigkeit und/oder einer Kollisions-Kontakt-Geometrie einerseits und auftretenden Verletzungen andererseits eine Beziehung hergeleitet und als Verletzungswissen in einen verletzungsbasierten Geschwindigkeitsregler integriert wird.

2. Verfahren nach Anspruch 1, **dadurch gekennzeichnet, dass** zum Herleiten einer Beziehung zwischen einer Kollisionsmasse, einer Kollisionsgeschwindigkeit und/oder einer Kollisions-Kontakt-Geometrie einerseits und auftretenden Verletzungen andererseits Kollisionstests durchgeführt werden.

3. Verfahren nach Anspruch 2, **dadurch gekennzeichnet, dass** die Kollisionstests mithilfe geometrischer Primitiven durchgeführt werden.

4. Verfahren nach wenigstens einem der Ansprüche 2 bis 3, **dadurch gekennzeichnet, dass** die Kollisionstests mithilfe frischer Schweinebauchproben durchgeführt werden.

5. Verfahren nach wenigstens einem der vorhergehenden Ansprüche, **dadurch gekennzeichnet, dass** die auftretenden Verletzungen durch unmittelbare medizinische Untersuchung eines Kollisionsbereichs, Präparation und Verletzungsanalyse und histopathologische Untersuchung medizinisch beurteilt werden.

6. Verfahren nach wenigstens einem der vorhergehenden Ansprüche, **dadurch gekennzeichnet, dass** die auftretenden Verletzungen anhand der AO-Klassifizierung in standardisierte Verletzungsklassen eingeteilt werden.

7. Verfahren nach wenigstens einem der vorhergehenden Ansprüche, **dadurch gekennzeichnet, dass** Sicherheitskennlinien abgeleitet werden, die eine maximale Geschwindigkeit und Masse mit einer Verletzung für ein bestimmtes Primitiv und Körperteil in Verbindung setzten.

8. Verfahren nach wenigstens einem der vorhergehenden Ansprüche, **dadurch gekennzeichnet, dass** eine maximal zulässige Geschwindigkeit mit

$$v_{\max}(m) = reg.lim\left[c_1(i, \mathbf{a}_i)m + c_2(i, \mathbf{a}_i), v_1, v_2\right], \quad (1)$$

ausgedrückt wird, wobei $c_1(i, a_i) < 0$ und $c_2(i, a_i)$ Koeffizienten der Sicherheits-kennlinien für das Primitiv i und die Parameter $v_1$, $v_2$ die minimal und maximal zulässige Geschwindigkeit sind.

9. Verfahren nach wenigstens einem der vorhergehenden Ansprüche 7 bis 8, **dadurch gekennzeichnet, dass** Koeffizienten der Sicherheitskennlinien für jedes bekannte Kontaktprimitiv in einer Verletzungsdatenbank gespeichert werden.

10. Verfahren nach wenigstens einem der vorhergehenden Ansprüche, **dadurch gekennzeichnet, dass** die Sicherheitskennlinien in Echtzeit zur Geschwindigkeitsanpassung verwendet werden.

11. Verfahren nach wenigstens einem der vorhergehenden Ansprüche, **dadurch gekennzeichnet, dass** für eine vorgegebene Bewegung eine instantane reflektierte Masse eines gegebenen POI und seine Sollgeschwindigkeit berechnet werden.

12. Verfahren nach wenigstens einem der vorhergehenden Ansprüche, **dadurch gekennzeichnet, dass** eine Geschwindigkeit dynamikbasiert in Realzeit skaliert wird.

13. Verfahren zum Steuern einer Robotereinrichtung (500) aufweisend einen bewegbaren Manipulator und/oder Effektor (400), **dadurch gekennzeichnet, dass** eine Bewegungsgeschwindigkeit und/oder -richtung des Manipulators und/oder Effektors (400) unter Berücksichtigung von biomechanischem und/oder medizinischem Wissen, das gemäß einem Verfahren nach wenigstens einem der vorhergehenden Ansprüchen nutzbar gemacht wird, und einer Roboterdynamik überwacht und gegebenenfalls angepasst wird.

14. Computerprogrammprodukt, das in eine Recheneinrichtung geladen werden kann und Softwarecodeabschnitte umfasst, mit denen ein Verfahren nach Anspruch 13 ausgeführt wird, wenn das Produkt auf der Recheneinrichtung läuft.

Fig. 1

Fig. 2

Fig. 3

Fig. 4

500

# Fig. 5

600

602

# Fig. 6

Fig. 7

| | Europäisches Patentamt | EUROPÄISCHER RECHERCHENBERICHT | Nummer der Anmeldung |
|---|---|---|---|
| | European Patent Office Office européen des brevets | | EP 18 20 4579 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2008/161970 A1 (ADACHI YUJI [JP] ET AL) 3. Juli 2008 (2008-07-03) * Zusammenfassung * * Absätze [0002], [0091], [0092] * * Absätze [0143] - [0146] * * Abbildungen 1A,5A,5B * | 1-14 | INV. G05B19/416 G05B19/4061 B25J9/16 |
| A | EP 1 380 393 A2 (KUKA ROBOTER GMBH [DE]) 14. Januar 2004 (2004-01-14) * Zusammenfassung * * Absätze [0006], [0007] * * Absätze [0015] - [0020] * * Abbildung 2 * | 1-14 | |
| A,D | S. HADDADIN; A. ALBU-SCHÄFFER; M. FROMMBERGER; J. ROSSMANN; G. HIRZINGER: "The 'DLR Crash Report': TOWARDS A STANDARD CRASH-TESTING PROTOCOL FOR ROBOT SAFETY - Part I: Results", IEEE INTERNATIONAL CONFERENCE ON ROBOTICS AND AUTOMATION, 12. Mai 2009 (2009-05-12), XP002718565, * Zusammenfassung * * Spalte 3 * | 1-14 | |
| A,D,P | S. HADDADIN; S. HAD- DADIN; A. KHOURY; T. ROKAHR; S. PARUSEL; R. BURGKART; A. BICCHI; A. ALBU-SCHÄFFER: "On making robots understand safety: Embedding injury knowledge into control", INT. J. OF ROBOTICS RESEARCH, 1. November 2012 (2012-11-01), XP002718566, * das ganze Dokument * | 1-14 | RECHERCHIERTE SACHGEBIETE (IPC) G05B B25J |

-/--

Der vorliegende Recherchenbericht wurde für alle Patentansprüche erstellt

| Recherchenort | Abschlußdatum der Recherche | Prüfer |
|---|---|---|
| Den Haag | 20. März 2019 | Dörre, Thorsten |

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 8 249 747 B2 (KOCK SOENKE [DE]; ABB RESEARCH LTD [CH]) 21. August 2012 (2012-08-21) * Spalten 1-4 * * Zusammenfassung * ----- | 1-14 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 20. März 2019 | Dörre, Thorsten |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
Dokument

EPO FORM 1503 03.82 (P04C03)

Seite 2 von 2

**ANHANG ZUM EUROPÄISCHEN RECHERCHENBERICHT
ÜBER DIE EUROPÄISCHE PATENTANMELDUNG NR.**

EP 18 20 4579

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-03-2019

| Im Recherchenbericht angeführtes Patentdokument | Datum der Veröffentlichung | Mitglied(er) der Patentfamilie | Datum der Veröffentlichung |
|---|---|---|---|
| US 2008161970 A1 | 03-07-2008 | CN 101039779 A | 19-09-2007 |
| | | JP 3927994 B2 | 13-06-2007 |
| | | JP WO2006043396 A1 | 22-05-2008 |
| | | US 2008161970 A1 | 03-07-2008 |
| | | US 2009125145 A1 | 14-05-2009 |
| | | WO 2006043396 A1 | 27-04-2006 |
| EP 1380393 A2 | 14-01-2004 | DE 10226853 B3 | 19-02-2004 |
| | | EP 1380393 A2 | 14-01-2004 |
| | | US 2003233171 A1 | 18-12-2003 |
| US 8249747 B2 | 21-08-2012 | CN 102239032 A | 09-11-2011 |
| | | EP 2364243 A1 | 14-09-2011 |
| | | US 2011264266 A1 | 27-10-2011 |
| | | WO 2010063319 A1 | 10-06-2010 |

EPO FORM P0461

Für nähere Einzelheiten zu diesem Anhang : siehe Amtsblatt des Europäischen Patentamts, Nr.12/82

# EP 3 474 100 A1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009051146 A1
- DE 102010063208 A1
- US 2008161970 A1

**In der Beschreibung aufgeführte Nicht-Patentliteratur**

- **A. ALBU-SCHÄFFER ; S. HADDADIN ; C. OTT, A. STEMMER ; T. WIMBÖCK ; G. HIRZINGER.** The DLR Lightweight Robot Lightweight Design and Soft Robotics Control Concepts for Robots in Human Environments. *Industrial Robot Journal,* 2007, vol. 34, 376-385
- **D. SHIN ; I. SARDELLITTI ; O. KHATIB.** Hybrid actuation approach for human-friendly robot design. *IEEE Int. Conf. on Robotics and Automation (ICRA2008),* 2008, 1741-1746
- **N. HOGAN.** Impedance control: An approach to manipulation: Part I -theory, Part II -implementation, Part III - applications. *Journal of Dynamic Systems, Measurement and Control,* 1985, vol. 107, 1-24
- **S. HADDADIN ; A. ALBU-SCHÄFFER ; A. D. LUCA ; G. HIRZINGER.** Collision detection & reaction: A contribution to safe physical human-robot interaction. *IEEE/RSJ Int. Conf. on Intelligent Robots and Systems (IROS2008),* 2008, 3356-3363
- **A. DE LUCA ; R. MATTONE.** An Adapt-and-Detect Actuator FDI Scheme for Robot Manipulators. *IEEE Int. Conf. on Robotics and Automation (ICRA2004),* 2004, 4975-4980
- **Y. YAMADA ; Y. HIRASAWA ; S. HUANG ; Y. UMETANI ; K. SUITA.** Human-robot contact in the safeguarding space. *IEEE/ASME Transactions on Mechatronics,* 1997, vol. 2 (4), 230-236
- **K. IKUTA ; H. ISHII ; M. NOKATA.** Safety evaluation method of design and control for human-care robots. *The Int. J. of Robotics Research,* 2003, vol. 22 (5), 281-298
- **A. BICCHI ; G. TONIETTI.** Fast and soft arm tactics: Dealing with the safety-performance tradeoff in robot arms design and control. *IEEE Robotics and Automation Magazine,* 2004, vol. 11 (2), 22-23
- **M. ZINN ; O. KHATIB ; B. ROTH ; J. K. SALISBURY.** A new actuation approach for human-friendly robot design. *International Journal ofRobotics Research,* 2005, vol. 23 (4/5), 379-398
- **J. HEINZMANN ; A. ZELINSKY.** Quantitative safety guarantees for physical human-robot interaction. *The Int. J. of Robotics Research,* 2003, vol. 22 (7-8), 479-504
- **S. OBERER ; R.-D. SCHRAFT.** Robot-dummy crash tests for robot safety assessment. *IEEE Int. Conf. on Robotics and Automation (ICRA2007),* 2007, 2934-2939
- **J.-J. PARK ; J.-B. SONG.** Collision analysis and evaluation of collision safety for service robots working in human environments. *Advanced Robotics,* 2009
- *ICAR 2009. International Conference on,* 2009, 1-6
- **D.GAO ; C. WAMPLER.** On the use of the head injury criterion (HIC) to assess the danger of robot impacts. *IEEE Robotics and Automation Mag.,* 2009, vol. 16 (4), 71-74
- **B. POVSE ; D. KORITNIK ; R. KAMNIK ; T. BAJD ; M. MUNIH.** Industrial robot and human operator collision. *IEEE Int. Conf. on Systems Man and Cybernetics (SMC2010),* 2010, 2663-2668
- **S. HADDADIN ; A. ALBU-SCHÄFFER ; G. HIRZINGER.** Safe Physical Human-Robot Interaction: Measurements, Analysis & New Insights. *International Symposium on Robotics Research (ISRR2007),* 2007, 439-450
- **M. WASSINK ; S. STRAMIGIOLI.** Towards a novel safety norm for domestic robots. *IEEE/RSJ Int. Conf. on Intelligent Robots and Systems (IROS2007),* 2007, 3243-3250
- **S. HADDADIN ; A. ALBU-SCHÄFFER ; G. HIRZINGER.** Safety Evaluation of Physical Human-Robot Interaction via Crash-Testing. *Robotics: Science and Systems Conference (RSS2007),* 2007
- Requirements for Safe Robots: Measurements, Analysis & New Insights. *Int. J. of Robotics Research,* 2009, vol. 28 (11), 1507-1527
- **S. HADDADIN ; A. ALBU-SCHÄFFER ; M. FROMMBERGER ; J. ROßMANN ; G. HIRZINGER.** The ''DLR Crash Report'': Towards a Standard Crash-Testing Protocol for Robot Safety -Part I: Results. *IEEE Int. Conf. on Robotics and Automation (ICRA2008),* 2009, 272-279

- **J. PARK ; S. HADDADIN ; J. SONG ; A. ALBU-SCHÄFFER.** Designing optimally safe robot surface properties for minimizing the stress characteristics of human-robot collisions. *IEEE Int. Conf. on Robotics and Automation (ICRA2011),* 2011, 5413-5420
- **T. P. RÜEDI ; R. E. BUCKLEY ; C. G. MORGAN.** AO Principles of Fracture Management. 2007
- **S. HADDADIN ; S. HADDADIN ; A. KHOURY ; T. ROKAHR ; S. PARUSEL ; R. BURGKART ; A. BICCHI ; A. ALBU-SCHÄFFER.** On making robots understand safety: Embedding injury knowledge into control. *Int. J. of Robotics Research,* 2012
- **O. KHATIB.** Inertial properties in robotic manipulation: an object-level framework. *Int. J. Robotics Research,* 1995, vol. 14 (1), 19-36